# EUROPEAN PATENT APPLICATION

(11) **EP 4 842 000 A1**
(43) Date of publication of application: **18.11.2026**
(21) Application number: 25305699.8
(22) Date of filing: 16.05.2025
(51) Int. Cl.: H04N 21/81

(54) **METHOD TO GENERATE PHYSICS PARAMETERS IN AN AR EXPERIENCE**

(71) Applicant: InterDigital CE Patent Holdings, SAS, 75017 Paris (FR)
(72) Inventor: LEROY, Bertrand, 35170 BRUZ (FR); JOUET, Pierrick, 35000 RENNES (FR); LELIEVRE, Sylvain, 35760 MONTGERMONT (FR); HIRTZLIN, Patrice, 35830 BETTON (FR); FAIVRE D'ARCIER, Etienne, 35750 SAINT GONLAY (FR); FONTAINE, Loic, 35530 NOYAL SUR VILAINE (FR); MULARD, Julien Pierre Henri Philippe, 35000 RENNES (FR)
(74) Representative: Rittner, Karsten

(57) **Abstract**

Some embodiments of a method may include: receiving a scene description file; parsing the scene description file; identifying metadata that give instructions to estimate physics parameters for representation of real objects; and determining, for an augmented reality (AR) experience, the physics parameters related to the real objects in a real environment. Some embodiments of a method may include: identifying one or more real objects in a real environment; determining, for an augmented reality (AR) experience, one or more physics parameters related to at least one of the one or more real objects; and generating a scene description file for the AR experience, wherein the scene description file comprises information indicating the one or more physics parameters related to at least one of the one or more real objects.

## Description

### INCORPORATION BY REFERENCE

The present application incorporates by reference in their entirety the following application: European Patent Application Serial No. EP24305455, entitled "REAL SCENE REPRESENTATION IN EXTENDED REALITY APPLICATIONS" and filed March 26, 2024 ("'455 application").

### BACKGROUND

The present application is related to scene description.

### SUMMARY

A first example method in accordance with some embodiments may include: receiving a scene description file; parsing the scene description file; identifying metadata that give instructions to estimate physics parameters for representation of real objects; and determining, for an augmented reality (AR) experience, the physics parameters related to the real objects in a real environment.

For some embodiments of the first example method, the physics parameters include physics parameters used for a simulation of at least one of the real objects, and parsing the scene description file includes parsing a physics parameters description element.

Some embodiments of the first example method may further include: creating a digital twin of at least one of the real objects, wherein the digital twin, in the AR experience, simulates operation of one of the real objects in the real environment.

Some embodiments of the first example method may further include scanning the real environment to identify real objects.

For some embodiments of the first example method, determining the physics parameters includes generating one or more specified physics parameters for at least one object detected in the real environment.

For some embodiments of the first example method, at least one of the specified physics parameters corresponds to the metadata that give instructions to estimate a physics parameters description element.

Some embodiments of the first example method may further include receiving instructions to estimate one or more physics parameters corresponding to one or more real objects in the real environment.

Some embodiments of the first example method may further include decoding the scene description file.

A first example apparatus in accordance with some embodiments may include: a processor; and a memory storing instructions operative, when executed by the processor, to cause the apparatus to perform any one of the methods listed above.

A second example method in accordance with some embodiments may include: identifying one or more real objects in a real environment; determining, for an augmented reality (AR) experience, one or more physics parameters related to at least one of the one or more real objects; and generating a scene description file for the AR experience, wherein the scene description file includes information indicating the one or more physics parameters related to at least one of the one or more real objects.

Some embodiments of the second example method may further include: sending instructions to estimate one or more physics parameters related to at least one of the one or more real objects.

Some embodiments of the second example method may further include scanning the real environment to identify real objects.

For some embodiments of the second example method, the scene description file complies with an MPEG-based standard.

Some embodiments of the second example method may further include: encoding the scene description file; and transmitting the encoded scene description file to a client device.

A second example apparatus in accordance with some embodiments may include: a processor; and a memory storing instructions operative, when executed by the processor, to cause the apparatus to perform any one of the methods listed above.

### BRIEF DESCRIPTION OF THE DRAWINGS

The following detailed description will be better understood when read in conjunction with the appended drawings, in which there are shown examples of one or more of the multiple embodiments of the present application. It should be understood, however, that the embodiments described herein are not limited to the precise arrangements and instrumentalities shown in the drawings. In the drawings:
FIG. 1 is a system diagram illustrating an example set of interfaces for a system according to some embodiments.
FIG. 2 is a process diagram illustrating an example process for identifying and predicting materials for objects according to some embodiments.
FIG. 3 is a process diagram illustrating an example process for determining physics parameters according to some embodiments.
FIG. 4 is a flowchart illustrating an example decoding process according to some embodiments.
FIG. 5 is a flowchart illustrating an example encoding process according to some embodiments.

The entities, connections, arrangements, and the like that are depicted in-and described in connection with-the various figures are presented by way of example and not by way of limitation. As such, any and all statements or other indications as to what a particular figure "depicts," what a particular element or entity in a particular figure "is" or "has," and any and all similar statements-that may in isolation and out of context be read as absolute and therefore limiting-may only properly be read as being constructively preceded by a clause such as "In at least one embodiment, ...." For brevity and clarity of presentation, this implied leading clause is not repeated *ad nauseum* in the detailed description.

### DETAILED DESCRIPTION

In describing the various embodiments of the present application, certain terminology is used herein for convenience only and should not be considered as limiting such embodiments. In the drawings, the same reference numerals are employed for designating the same elements throughout the several figures and the present description.

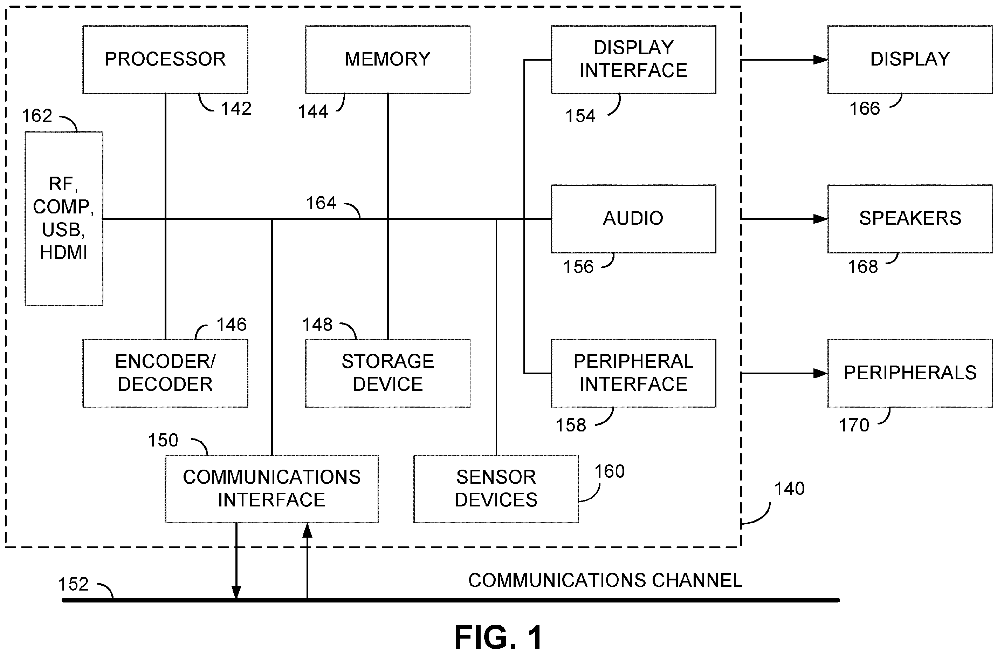

FIG. 1 is a system diagram illustrating an example set of interfaces for a system according to some embodiments. An extended reality display device, together with its control electronics, may be implemented using a system such as the system of FIG. 1. System 140 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 140, singly or in combination, can be embodied in a single integrated circuit (IC), multiple ICs, and/or discrete components. For example, in at least one embodiment, the processing and encoder/decoder elements of system 140 are distributed across multiple ICs and/or discrete components. In various embodiments, the system 140 is communicatively coupled to one or more other systems, or other electronic devices, via, for example, a communications bus or through dedicated input and/or output ports. In various embodiments, the system 140 is configured to implement one or more of the aspects described in this document.

The system 140 includes at least one processor 142 configured to execute instructions loaded therein for implementing, for example, the various aspects described in this document. Processor 142 may include embedded memory, input output interface, and various other circuitries as known in the art. The system 140 includes at least one memory 144 (e.g., a volatile memory device, and/or a non-volatile memory device). System 140 may include a storage device 148, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 148 can include an internal storage device, an attached storage device (including detachable and non-detachable storage devices), and/or a network accessible storage device, as non-limiting examples.

System 140 includes an encoder/decoder module 146 configured, for example, to process data to provide an encoded video or decoded video, and the encoder/decoder module 146 can include its own processor and memory. The encoder/decoder module 146 represents module(s) that can be included in a device to perform the encoding and/or decoding functions. As is known, a device can include one or both of the encoding and decoding modules. Additionally, encoder/decoder module 146 can be implemented as a separate element of system 140 or can be incorporated within processor 142 as a combination of hardware and software as known to those skilled in the art.

Program code to be loaded onto processor 142 or encoder/decoder 146 to perform the various aspects described in this document can be stored in storage device 148 and subsequently loaded onto memory 144 for execution by processor 142. In accordance with various embodiments, one or more of processor 142, memory 144, storage device 148, and encoder/decoder module 146 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 142 and/or the encoder/decoder module 146 is used to store instructions and to provide working memory for processing that is needed during encoding or decoding. In other embodiments, however, a memory external to the processing device (for example, the processing device can be either the processor 142 or the encoder/decoder module 142) is used for one or more of these functions. The external memory can be the memory 144 and/or the storage device 148, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 140 can be provided through various input devices as indicated in block 162. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 1, include composite video.

In various embodiments, the input devices of block 162 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and band-limited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 140 to other electronic devices across USB and/or HDMI connections. It is to be understood that various aspects of input processing, for example, Reed-Solomon error correction, can be implemented, for example, within a separate input processing IC or within processor 142 as necessary. Similarly, aspects of USB or HDMI interface processing can be implemented within separate interface ICs or within processor 142 as necessary. The demodulated, error corrected, and demultiplexed stream is provided to various processing elements, including, for example, processor 142, and encoder/decoder 146 operating in combination with the memory and storage elements to process the datastream as necessary for presentation on an output device.

Various elements of system 140 can be provided within an integrated housing, Within the integrated housing, the various elements can be interconnected and transmit data therebetween using suitable connection arrangement 164, for example, an internal bus as known in the art, including the Inter-IC (I2C) bus, wiring, and printed circuit boards.

The system 140 includes communication interface 150 that enables communication with other devices via communication channel 152. The communication interface 150 can include, but is not limited to, a transceiver configured to transmit and to receive data over communication channel 152. The communication interface 150 can include, but is not limited to, a modem or network card and the communication channel 152 can be implemented, for example, within a wired and/or a wireless medium.

Data is streamed, or otherwise provided, to the system 140, in various embodiments, using a wireless network such as a Wi-Fi network, for example IEEE 802.11 (IEEE refers to the Institute of Electrical and Electronics Engineers). The Wi-Fi signal of these embodiments is received over the communications channel 152 and the communications interface 150 which are adapted for Wi-Fi communications. The communications channel 152 of these embodiments is typically connected to an access point or router that provides access to external networks including the Internet for allowing streaming applications and other over-the-top communications. Other embodiments provide streamed data to the system 140 using a set-top box that delivers the data over the HDMI connection of the input block 162. Still other embodiments provide streamed data to the system 140 using the RF connection of the input block 162. As indicated above, various embodiments provide data in a non-streaming manner. Additionally, various embodiments use wireless networks other than Wi-Fi, for example a cellular network or a Bluetooth network.

The system 140 can provide an output signal to various output devices, including a display 166, speakers 168, and other peripheral devices 170. The display 166 of various embodiments includes one or more of, for example, a touchscreen display, an organic light-emitting diode (OLED) display, a curved display, and/or a foldable display. The display 166 can be for a television, a tablet, a laptop, a cell phone (mobile phone), or other device. The display 166 can also be integrated with other components (for example, as in a smart phone), or separate (for example, an external monitor for a laptop). The other peripheral devices 170 include, in various examples of embodiments, one or more of a stand-alone digital video disc (or digital versatile disc) (DVR, for both terms), a disk player, a stereo system, and/or a lighting system. Various embodiments use one or more peripheral devices 170 that provide a function based on the output of the system 140. For example, a disk player performs the function of playing the output of the system 140.

In various embodiments, control signals are communicated between the system 140 and the display 166, speakers 168, or other peripheral devices 170 using signaling such as AV.Link, Consumer Electronics Control (CEC), or other communications protocols that enable device-to-device control with or without user intervention. The output devices can be communicatively coupled to system 140 via dedicated connections through respective interfaces 154, 156, and 158. Alternatively, the output devices can be connected to system 140 using the communications channel 152 via the communications interface 150. The display 166 and speakers 168 can be integrated in a single unit with the other components of system 140 in an electronic device such as, for example, a television. In various embodiments, the display interface 154 includes a display driver, such as, for example, a timing controller (T Con) chip.

The display 166 and speaker 168 can alternatively be separate from one or more of the other components, for example, if the RF portion of input 162 is part of a separate set-top box. In various embodiments in which the display 166 and speakers 168 are external components, the output signal can be provided via dedicated output connections, including, for example, HDMI ports, USB ports, or COMP outputs.

The system 140 may include one or more sensor devices 160. Examples of sensor devices that may be used include one or more GPS sensors, gyroscopic sensors, accelerometers, light sensors, cameras, depth cameras, microphones, and/or magnetometers. Such sensors may be used to determine information such as user's position and orientation. Where the system 140 is used as the control module for an extended reality display (such as control modules), the user's position and orientation may be used in determining how to render image data such that the user perceives the correct portion of a virtual object or virtual scene from the correct point of view. In the case of head-mounted display devices, the position and orientation of the device itself may be used to determine the position and orientation of the user for the purpose of rendering virtual content. In the case of other display devices, such as a phone, a tablet, a computer monitor, or a television, other inputs may be used to determine the position and orientation of the user for the purpose of rendering content. For example, a user may select and/or adjust a desired viewpoint and/or viewing direction with the use of a touch screen, keypad or keyboard, trackball, joystick, or other input. Where the display device has sensors such as accelerometers and/or gyroscopes, the viewpoint and orientation used for the purpose of rendering content may be selected and/or adjusted based on motion of the display device.

The embodiments can be carried out by computer software implemented by the processor 142 or by hardware, or by a combination of hardware and software. As a non-limiting example, the embodiments can be implemented by one or more integrated circuits. The memory 144 can be of any type appropriate to the technical environment and can be implemented using any appropriate data storage technology, such as optical memory devices, magnetic memory devices, semiconductor-based memory devices, fixed memory, and removable memory, as non-limiting examples. The processor 142 can be of any type appropriate to the technical environment, and can encompass one or more of microprocessors, general purpose computers, special purpose computers, and processors based on a multi-core architecture, as non-limiting examples.

A User Equipment (UE) may correspond to any eXtended Reality (XR) device/node which may come in variety of form factors. Typical UE (e.g., XR UE) may include, but not limited to the following: Head Mounted Displays (HMD), optical see-through glasses and video see-through HMDs for Augmented Reality (AR) and Mixed Reality (MR), mobile devices with positional tracking and camera, wearables etc. In addition to the above, several different types of XR UE may be envisioned based on XR device functions for e.g., as display, camera, sensors, sensor processing, wireless connectivity, XR/Media processing, and power supply, to be provided by one or more devices, wearables, actuators, controllers and/or accessories. One or more device/nodes/UEs may be grouped into a collaborative XR group for supporting any of XR applications/experience/services.

This application is a method that generates, in an AR experience, the physics parameters of real objects in a scene. There are planned contributions to the MPEG-I Scene Description based on this application.

This application is based on dedicated semantics in a scene description file. For some embodiments, those semantics may include: (1) receiving and parsing a scene description file; (2) identifying the metadata that gives parameters for the representation of real objects including parameters for the physics simulation; and (3) getting the physics parameters related to real objects for the AR experience.

The physics parameters of some real objects may be described so that interactions (e.g., collisions) between these objects and virtual objects will be realistic. For some embodiments, some configured physics parameters of some real objects may be computed and/or estimated to allow realistic interaction between real and virtual objects.

### 3D Model, Segmentation, and Labelling

A 3D model of a real environment is used to check collisions and occlusions, and to correctly position shadows and virtual objects.

The 3D model of a real scene may be extracted from images of the environment, captured by an RGB camera, from different points of view (e.g., with structure from motion technics).

The labeling and segmentation may be performed from a textured mesh. The textured mesh provides a segmented 3D model.

In a segmented 3D model, each element / object may be accessed individually. For instance, due to the labeling of each object, all the chairs in the scene may be selected and physics parameters generated from each element.

### Physics Parameters

To handle collision between objects in a XR environment, a collider is defined for an object. A collider is a component that defines the shape of an object for physical collisions. The collider is invisible and may not have the same shape as the object mesh.

The consistent handling of collisions between virtual and real objects requires real object colliders. Hence, one of the functions provided by spatial computing platforms is the creation of colliders used by physics simulation engines. These colliders are generated based on the input 3D model of the surrounding environment.

The collision shape of the object may be defined using either primitive shapes or mesh-based shapes.

Primitive shapes, such as a box, sphere, capsule, cylinder, or cone, are best in terms of memory and performance but do not necessarily reflect the actual shape of the object. They are calculated based on the object's bounding box.

Mesh-based shapes (e.g., convex hull or mesh) are calculated based on the geometry of the object and therefore are a better representation of the object.

In an AR experience, virtual objects interact with real objects of the scene. Physics simulation for interactive objects will improve the XR experience.

For a static real scene, the physics parameters of real objects may be used by the physics engine to compute interaction with virtual objects.

A physics engine is a software library used to realistically simulate physical systems. These engines handle dynamics calculations, which include forces, collisions, and motions. These engines allow objects to fall, slip, bounce, and react to each other as they would in the real world.

Rigid bodies are directly controlled by the physics engine to simulate the behavior of their corresponding physics objects. A rigid body's behavior may be altered by setting its properties, such as mass and weight. A physics material needs to be associated with the rigid body to adjust its friction and bounciness.

Friction is a force that impedes motion between two surfaces that are in contact with each other. For example, ice has a low-friction surface, which allows objects to slide easily across its surface. Rubber has a high-friction surface, which prevents objects from sliding across its surface.

The bounciness of a surface is called the "coefficient of restitution". The coefficient of restitution is represented as a number between 0 and 1, which defines how much speed an object retains in the opposite direction along the line of impact after a collision.

Other physics objects may include some of the following parameters (non-exhaustive list): linearDamping, angularDamping, mass, restitution, staticFriction, and dynamicFriction.

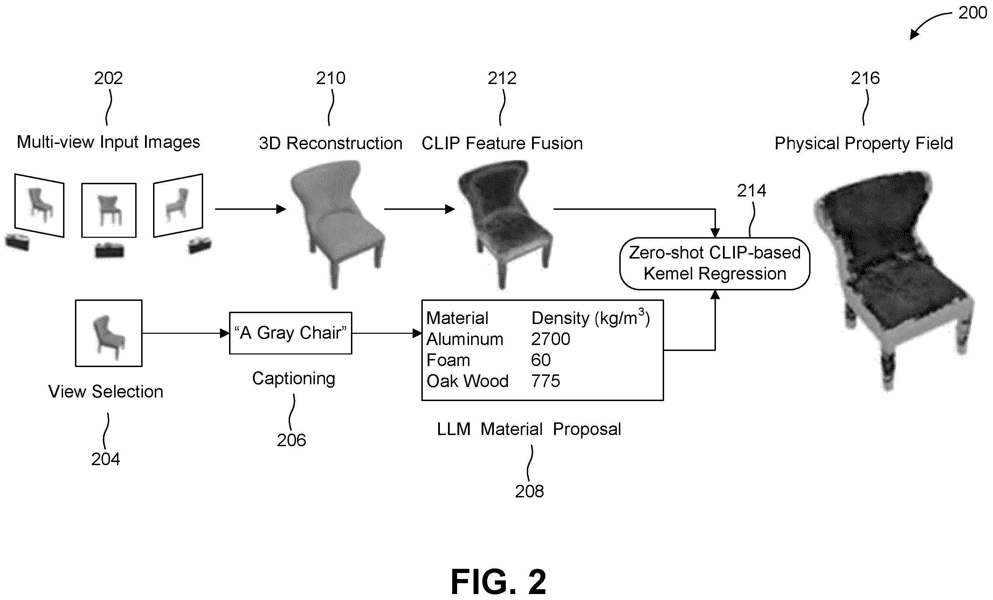

FIG. 2 is a process diagram illustrating an example process for identifying and predicting materials for objects according to some embodiments. Using large language models, dense prediction of the physical properties of objects may be done for a collection of images, according to Zhai, Albert, et al., Physical Property Understanding from Language-Embedded Feature Fields, available at: arxiv<dot>org/pdf/2404<dot>04242.

For each object, materials may be proposed as shown in FIG. 2. FIG. 2 shows an example prediction process 200 for predicting possible materials for a chair. Multi-view input images 202 are obtained by the process 200. One of the multi-view images 202 is selected 204 as a view to be used. The view is used to generate captioning 206. For this example, the generated captioning is "A Gray Chair". A Large Language Model (LLM) material proposal 208 is generated for the chair. In general, an LLM is an artificial intelligence (AI) system designed to process vast amounts of data to understand and generate information. The LLM material proposal 208 includes the density for several materials. For the example shown in FIG. 2, aluminum is estimated to have a density of 2700 kg/m3; foam is estimated to have a density of 60 kg/m³; and oak wood is estimated to have a density of 775 kg/m³. In parallel, a 3D reconstruction 210 is generated using the multi-view images 202. The 3D reconstruction 210 is used to perform a CLIP feature fusion version 212 of the chair. The CLIP feature fusion version 212 of the chair is combined with the LLM material proposal 208 as inputs to a zero-shot CLIP-based kernel regression process 214. A physical property field 216 is generated.

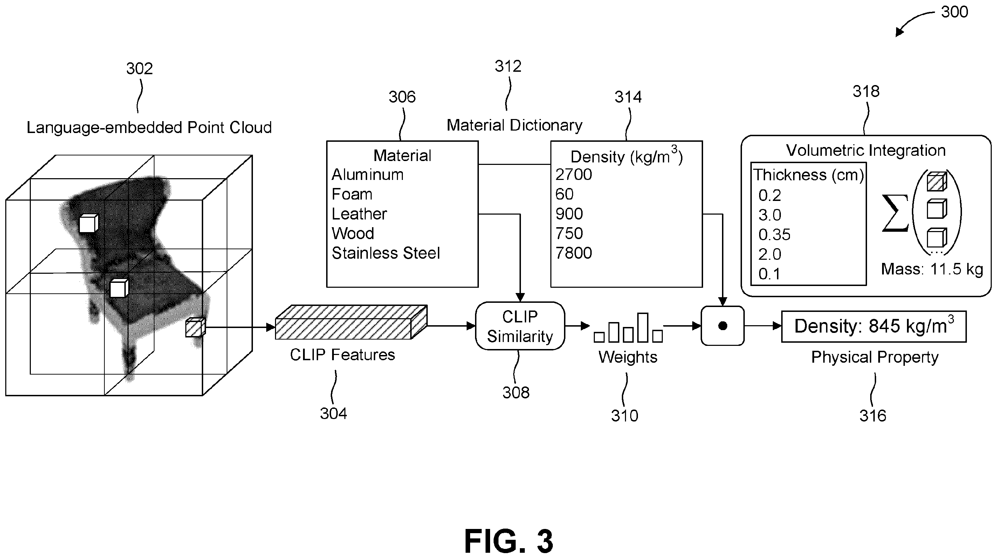

FIG. 3 is a process diagram illustrating an example process for determining physics parameters according to some embodiments. In the process 300 of FIG. 3, a language-embedded point cloud 302 is obtained as an input. The process 300 may be used to predict the mass of an object. A language-embedded point cloud 302 is an input to the process 300. The corresponding CLIP features 304 are identified and inputted into a CLIP similarity process 308. The CLIP similarity process 308 goes to a material dictionary 312 and looks up the density 314 for materials 306 associated with the language-embedded point cloud 302. For some embodiments, such materials may be obtained from an LLM material proposal. The CLIP similarity process 308 determines weights 310 and multiplies the density times the weights to generate the physical property of density 316 for the whole chair. For this example, the whole chair is determined to have a density of 845 kg/m³. A volumetric integration process 318 is performed to determine a mass of 11.5 kg for this example chair.

For each object, the mass, friction, and bounciness, for example, are estimated. With these parameters, physics materials may be added to the rigid bodies of real objects. A digital twin of the real object may then be created. Once the digital twin has been modelled, physics parameters may be used by a physics engine to ensure the digital twin behaves realistically.

An MPEG Scene Description is capable of specifying a rich experience involving virtual objects, real objects in the user's environment, avatars, user interaction logic, among other things. For complex interactions, a physics simulation may be necessary. To simulate interactions (such as movements and collisions, among other things) between virtual objects and real parts of the scene, a physics engine needs parameters describing the physics properties of the objects.

The Scene Description specification Text of ISO/IEC 23090-14 2nd Edition CDAM 1: Support of MPEG-I Immersive Audio, Scene Understanding and Other Extensions, ISO/IEC 23090-14, 2nd Edition, WG03, N01454, CDAM1, available at: iso<dot>org ("*WG03_N01454_CDAM1_23090-14_2nd*") defines structures for specifying physics parameters at both Scene Level and Node Level. However, these past proposals focused on physics properties of the virtual objects. For a convincing physics simulation, the physics properties of real objects in the user environment also are needed, but a content creator may not know enough about the user environment to provide these values.

The present application discusses extensions to an MPEG Scene Description to specify which physics properties of real objects are needed to support realistic physics simulation for the current content / current experience. For the present application, a client device may scan the real environment and may estimate, generate, and/or retrieve physics parameters that will be needed to support the experience. This methodology ensures that the client has enough information to produce the needed parameters. This methodology also reduces the computational load because the client does not need to generate parameters that are not requested by the content creator.

The present application discusses specifying, at the MPEG_Anchor extension level, physics parameters required for real objects, though other signaling locations may be used for some embodiments. The key, for some embodiments, seems to be associating the physics parameter specification with an object label, a list of objects, and/or a type or class of object. If a specified object or object type is found in a user environment, the client may produce the needed physics parameters for that object or object type.

A content creator specifies which physics parameters (or physics properties) for real objects and/or real scene elements are necessary to perform a convincing physics simulation between the virtual objects and the real objects in the scene. The structure does not specify the values of those physics parameters. Indeed, the content creator may not know enough about the user's real environment to provide such values.

Rather, the structure sends instructions to the client to indicate which physics parameters are needed for the current content experience. Based on those instructions, the client generates, estimates, and/or otherwise obtains the required physics parameters for those real objects. The client may do this based on sensors (e.g., via a 3D scan of the room), based on analyzing captured images of the real environment, based on performing a table lookup of what physics parameters are needed for certain object types. For example, a "table" tending to have a solid/rigid top, whereas a "sofa" tends to have a soft cushioned top. An average apple may have a certain mass, and a carpet may have a higher coefficient of friction than a hard wood floor.

For some embodiments, artificial intelligence (AI) may be used by a client to estimate / generate the required physics parameters.

For some embodiments, a content creator specifies a list of physics parameters for different objects. For example, the client may estimate the mass of a real baseball sitting on a table. However, the table itself may only require the hardness/bounciness of the tabletop to be estimated. Which parameters are needed for which objects (or object types) may depend on the content and the intended MR/XR experience. Based on these instructions, the client generates, estimates, and/or otherwise obtains the specified physics parameters for those objects.

Generating the physics parameters for real objects / real scene elements may be computationally expensive. For a given MR/XR content experience, a client may not need to generate parameters for all objects in the scene nor all physics parameters for a given object. This methodology has the advantage of specifying per object or per object type which of the physics parameters are necessary for the given experience.

Some embodiments may specify this information within the MPEG_Anchor extension. Some embodiments may specify/signal this information via another method. Some embodiments may signal this information somewhere within the scene description by indicating an association between a real object or real object type and a set of physics parameters that the client estimates, generates, and/or retrieves for that real object or real object type. For some embodiments, signaling may be used to specify the same physics parameters for a list of objects (or object types) or for all objects in the scene.

For some embodiments, the client: receives a scene description file; parses the PhysicsParameters description; scans the real environment to identify objects; and estimates / generates the specified physics parameters for any object (or type of object) detected in the real environment for which the PhysicsParameters description specifies such parameters.

A scene description file provides a graph-based representation of a virtual scene. For an augmented reality (AR) application, this virtual scene is anchored in a user's real environment. The MPEG_anchor gITF extension introduces the concept an anchor object. Through the MPEG_anchor extension, a content creator is able to indicate which knowledge of the real environment is required for an AR experience.

In the current MPEG-I Scene Description specification, some parameters are available, such as the type of trackable (features of the real world to detect and track) and the MinimumRequiredSpace (minimum space required to anchor a virtual scene).

In the present application, physics parameters are added to enable a content creator to indicate physics properties associated with a scan of user's environment that will need to be estimated in order to manage realistic collisions between real and virtual objects. Since the estimation of these physics parameters are related to real objects, a coherent approach is to provide them in a gITF extension: MPEG_anchor.

In the present application, the parameters added in the anchor extension are not physics parameter values. Rather, the added items are a list of physics parameters that the application will have to estimate during the scan of the real environment. The scan of the real environment is used by a rendering engine to manage the interaction between the virtual objects described in the scene description file and the real objects. See also the scan parameters of the '455 application.

Some embodiments may include sending instructions to estimate certain physics parameters when scanning a room or scene.

### MPEG Scene Description (SD)

MPEG-I Scene Description is a standard developed by MPEG for immersive media. MPEG-I Scene Description defines the structure and composition of a 3D scene, referencing and positioning 2D and 3D assets in the scene, and provides information for rendering the scene properly.

Semantics already exist in gITFscene description language. For example, in the reference MPEG-SD 2nd edition, the MPEG_anchor extension specifies an element of the real world where virtual elements should be positioned, according to *Text of ISO*/*IEC 23090-14 2nd Edition,* ISO/IEC 23090-14, 2nd Edition, *available at:* iso<dot>org.

AR anchoring allows for anchoring of a scene or some root nodes of a scene into the user's real environment to provide an AR experience. AR anchoring is supported at the scene level and at the node level, as well as an extension through the definition of the MPEG_anchor extension.

Once anchored, the elements of the scene may interact with the real environment. In MPEG-SD 2^{nd} edition, amd1, additional parameters in the anchoring extension also specify how the representation of this environment may be provided to manage these interactions and to reach expected AR experience.

Anchors are defined in section 8.1 of the document *WG03_N01454_CDAM1_23090-14_2nd.*

For specific AR use cases, where virtual objects are integrated in the user's environment, how virtual objects interact with real objects may be determined, for instance to know how a virtual ball thrown onto a table will bounce.

A content creator may want to indicate to an AR application if and how the real user's environment should interact to have the best integration of the 3D virtual scene.

Those indications may be inserted in the description of the virtual scene, e.g., in a MPEG-SD description file. But the MPEG-SD specifications are understood to be missing how to signal which physics parameters are needed for the real objects to properly simulate interactions with the virtual objects during an AR experience.

This application discusses parameters to be added in a scene description file. These parameters may specify descriptions related to the physical parameters of the real objects. The semantics are described in the scope of MPEG-SD, but this idea may be applied to any other scene description language.

This application provides a semantic for a scene description file that allows the scene designer to specify which items (Identification of Real Object) and which physics parameters (e.g., friction, restitution, ...) of the real environment may be retrieved.

This semantic may be used by a server or by the user equipment (UE) to generate physics parameters of the real object.

Semantics already exist in scene description language, e.g., the MPEG-SD MPEG_anchor extension. Such semantics specify an element of the real world and where virtual elements should be positioned and how the representation of the real world may be provided to reach the expected experience.

These semantics may be added as new parameters in the *MPEG_anchor* extension. These semantics are related to the gITF format, but similar semantics apply to any other description format (e.g., USD, FBX, among others).

### Identification of Real Objects to Describe

To identify real objects in a scene description file, labels may be used ("table", "chair" ...). This method requires that the real scene has been segmented and labeled, according to Minaee, Shervin, et al., Image Segmentation Using Deep Learning, (2024), *available at:* porikli<dot>com/mysite/pdfs/porikli%202024%20-%20Image%20segmentation%20using%20deep%20learning%20-%20book%20chapter<dot>pdf.

To identify real objects, a volume may be specified, e.g., by using elementary primitives (boxes, sphere...). Volumes are positioned relative to the trackable of the anchor object. All objects inside the volume may be analyzed.

### Physics Parameters

For each identified object, a list of parameters (or required parameters for some embodiments) may be provided to improve the behavior of the real objects when interacting with virtual objects.

As discussed earlier and in the *WG03_N01454_CDAM1_23090-14_2nd* document, a physics object is defined by the content creator.

Physics objects may handle the following parameters (non-exhaustive list): linearDamping, angularDamping, mass, restitution, staticFriction, and dynamicFriction.

### Semantics in MPEG SD

The semantics discussed above may be added as new parameters in the *MPEG_anchor* extension and to the semantics defined in the *WG03_N01454_CDAM1_23090-14_2nd* document, as well as in the '455 application.

In Tables 1 to 5, the "Type" defines the type of parameter. The "Usage" column indicates if the parameter is optional (O) or mandatory (M). The "Default" column lists a default value.

Table 1 gives the semantics of an anchor object with the object: *PhysicsParameters.* In accordance with the description above, the parameters will be as shown in Table 1.

**Table 1.**

| **Name** | **Type** | **Usage** | **Default** | **Description** |
|---|---|---|---|---|
| trackable | integer | M | | Index of the trackable in the trackables array that will be used for this anchor. |
| requiresAnchoring | boolean | M | | Indicates if AR anchoring is required for the rendering of the associated nodes. |
| | | | | If TRUE, the application shall skip the virtual assets attached to this anchor until the pose of this anchor in the real world is known. |
| | | | | if FALSE, the application shall process the virtual assets attached to this anchor |
| minimumRequiredSpace | vec3 | O | (0,0,0) | Space required to anchor the AR asset (x, y, z in meters). This space corresponds to an axis-aligned bounding box, placed at the origin of the trackable space and extending along the positive x+,y+, and z+ axes, expressed in the trackable local space. |
| | | | | This value shall be compared to the bounding box of the real-world available space associated with the trackable as estimated by the XR runtime. |
| aligned | enumeration | O | NOT_USED | the aligned flag may take one of the following values: NOT_USED=0, ALIGNED_NOTSCALED=1, ALIGNED_SCALED=2. |
| | | | | If ALIGNED_SCALED is set, the bounding box of the virtual assets attached to that anchor is aligned and scaled to match the bounding box of the real-world available space associated with the trackable as estimated by the XR runtime. |
| actions | array(number) | O | N/A | Indices of the actions in the actions array of the interactivity extension to be executed once the pose of this anchor is determined. An example is a setTransform action to place the virtual assets attached to that anchor. |
| light | integer | O | N/A | Reference to an item in the lights array of the MPEG_lights_texture_based extension. |
| PhysicsParameters | array | O | N/A | Array of PhysicsParametersObject Provides a set of parameters giving information of the physics parameters of real objects. The semantics of this object is given in Table 2. |

Table 2 gives the semantics of the *PhysicsParametersObject* object.

**Table 2.**

| **Name** | **Type** | **Usage** | **Default** | **Description** |
|---|---|---|---|---|
| Label | string | M | | Label of the object(s), e.g. "Chair", "Table" or "all" for all the objects |
| Mass | boolean | O | false | If true, a mass is required for the object. The mass of the object may be expressed in kilograms. |
| RestitutionRatio | boolean | O | false | If true, a RestitutionRatio is required for the object. |
| | | | | It defines how much speed an object retains in the opposite direction along the line of impact after a collision. |
| | | | | A value of 0 will not bounce. A value of 1 will bounce without any loss of energy. |
| | | | | If h is the height of the object at 1^{st} bounce and uₙ the height at n^{th} one: uₙ=h*RestitutionRatioⁿ⁻¹ |
| StaticFriction | boolean | O | false | If true, a StaticFriction is required for the object. |
| | | | | It defines how much friction the object's surface has against another object when the objects are not moving. |
| | | | | A value of zero feels like ice, a value of 1 will make it very hard to get the object moving. |
| | | | | The static friction is *F_{S}* = *StaticFriction***N*, where F_{S} is the static frictional force, StaticFriction is the coefficient, and N is the normal force. |
| DynamicFriction | boolean | O | false | If true, a DynamicFriction is required for the object. |
| | | | | It defines how much friction the object 's surface has against another object when the objects are moving or sliding against each other. |
| | | | | A value of zero feels like ice, a value of 1 will make it come to rest very quickly unless a lot of force or gravity pushes the object. |
| | | | | The frictional force is *F_{D}* = *DynamicFriction***R* where DynamicFriction is the coefficient of sliding or dynamic or kinetic friction and R is the magnitude of the normal reaction force of the two surfaces. |
| LinearDamping | boolean | O | false | If true, a LinearDamping is required for the object. |
| | | | | A non-negative value, in second⁻¹ (s⁻¹), as defined in the international unit system. It defines the linear drag coefficient which corresponds to the rate of decrease of the linear velocity over time. |
| | | | | It is used to compute a new velocity value V(t) at each simulation step (dt): V(t+dt) = V(t)*(1-linearDamping*dt), the velocity being clamped to 0. |
| AngularDamping | boolean | O | false | If true, an AngularDamping is required for the object. |
| | | | | A non-negative value, in second⁻¹ (s⁻¹), as defined in the international unit system. It defines the angular drag coefficient which corresponds to the rate of decrease of the angular velocity over time. |
| | | | | It is used to compute a new velocity value V(t) at each simulation step (dt): V(t+dt) = V(t)*(1-angularDamping*dt), the velocity being clamped to 0. |

Table 3 shows, for some embodiments, a list of enumerations for each label. Table 3 also shows an alternative definition of the object *PhysicsParametersObject* for some embodiments.

**Table 3.**

| **Name** | **Type** | **Usage** | **Default** | **Description** |
|---|---|---|---|---|
| Label | string | M | | Label of the object(s), e.g., "Chair", "Table", or "all" for all of the objects |
| PhysicsParametersArray | array(enumeration) | O | | A list of enumerations giving the required physics parameters. The possible enumerations may be one of the following values: MASS, RESTITUTION_RATIO, STATIC_FRICTION, DYNAMIC_FRICTION, LINEAR_DAMPING, ANGULAR_DAMPING |

Table 4 provides the semantics for a "Label" object. For some embodiments, the "Label" field may be an array of labels, allowing specifying the same parameters for multiple types of objects.

For some embodiments, the "label" field may be an object, thereby giving the ability to identify an object by a label or volume. At least one element (Labels or Volume) must be present. If both are present, only the Labels in the Volume are identified.

**Table 4.**

| **Name** | **Type** | **Usage** | **Default** | **Description** |
|---|---|---|---|---|
| Labels | array | O | | Set of labels. |
| Label | string | M | | Label of the object(s), e.g. "Chair", "Table" or "all" for all the objects |
| Volume | | O | | See Table 5. |

Table 5 gives the semantics of a volume item. In Table 5, 3D coordinates are expressed in the XR space relative to a trackable associated with the anchor.

**Table 5.**

| **Name** | | **Type** | **Usage** | **Default** | **Description** |
|---|---|---|---|---|---|
| Type | | enumeration | M | | SPHERE=0, BOX, FRUSTUM |
| If (Type == SPHERE) | | | | | |
| | Center | array | M | | 3D coordinate of the center of the sphere |
| | Radius | number | M | | Radius of the sphere in meters. |
| If (Type == BOX) | | | | | |
| | Pose | matrix | M | | 4*4 matrix representing the center position and orientation of the box |
| | Extents | array | O | | Edge-to-edge length of the box along each dimension. |
| If (Type == FRUSTUM) | | | | | |
| | Pose | matrix | M | | 4*4 matrix representing the position and orientation of the tip of the frustum |
| | Fov | vec4 | M | | Angles of the four sides of the frustum |
| | Far | number | M | | Positive distance of the far plane of the frustum |
| | Near | number | M | | Positive distance of the near plane of the frustum |

### Example Implementation

Code Listing 1 gives an example gITF description file, specifying *PhysicsParameters* parameters in the MPEG_anchor extension. Code Listing 1 is based on the semantics of Table 2. A label is used to identify the object to render. Code Listing 1 shows an example *PhysicsParameters* object for an anchor.

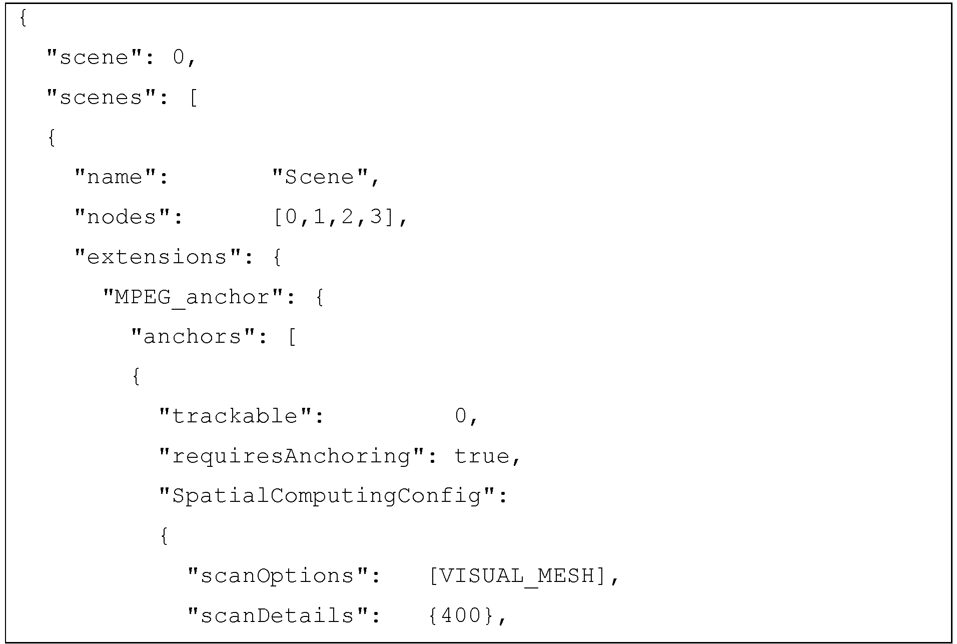

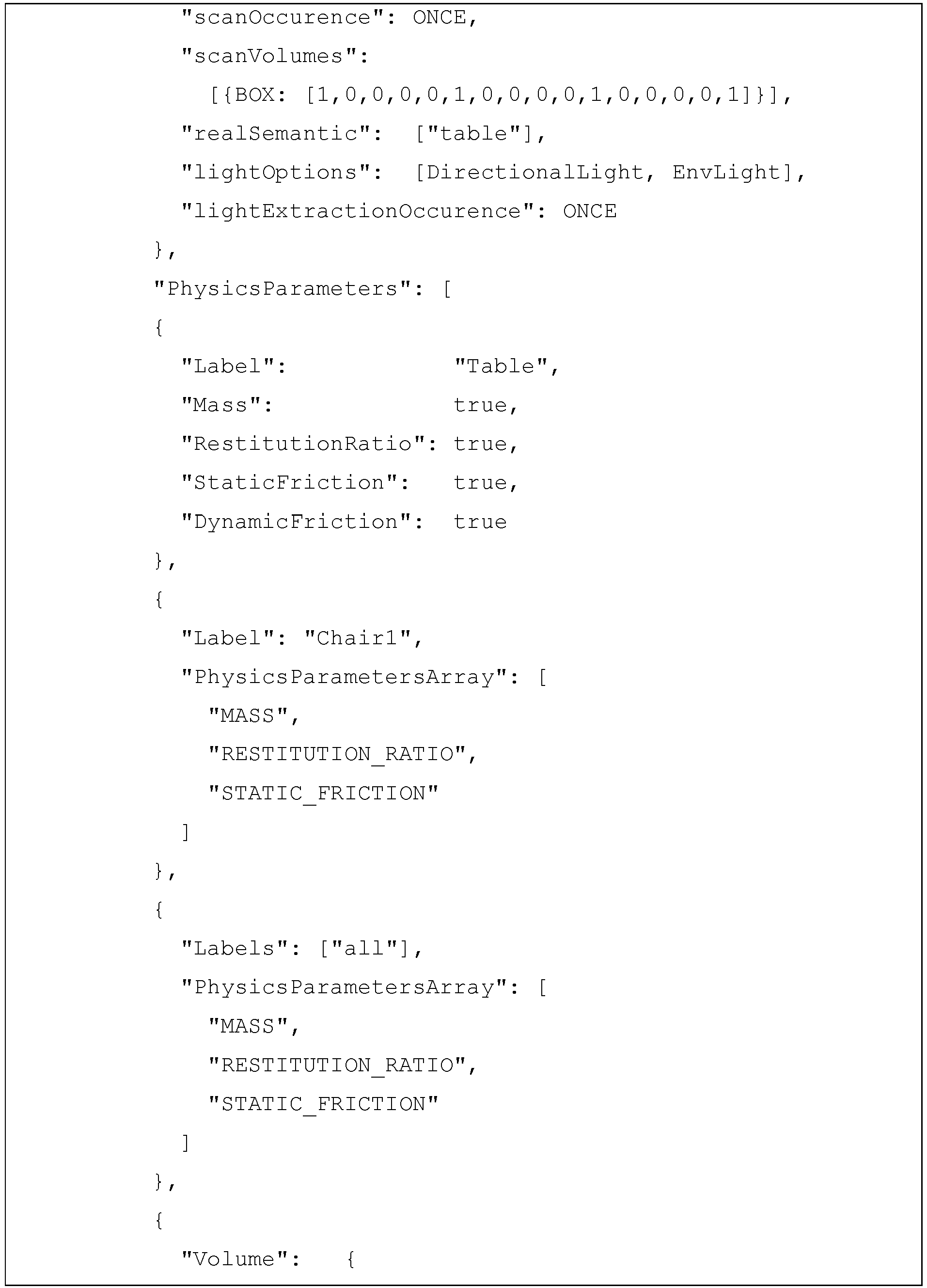

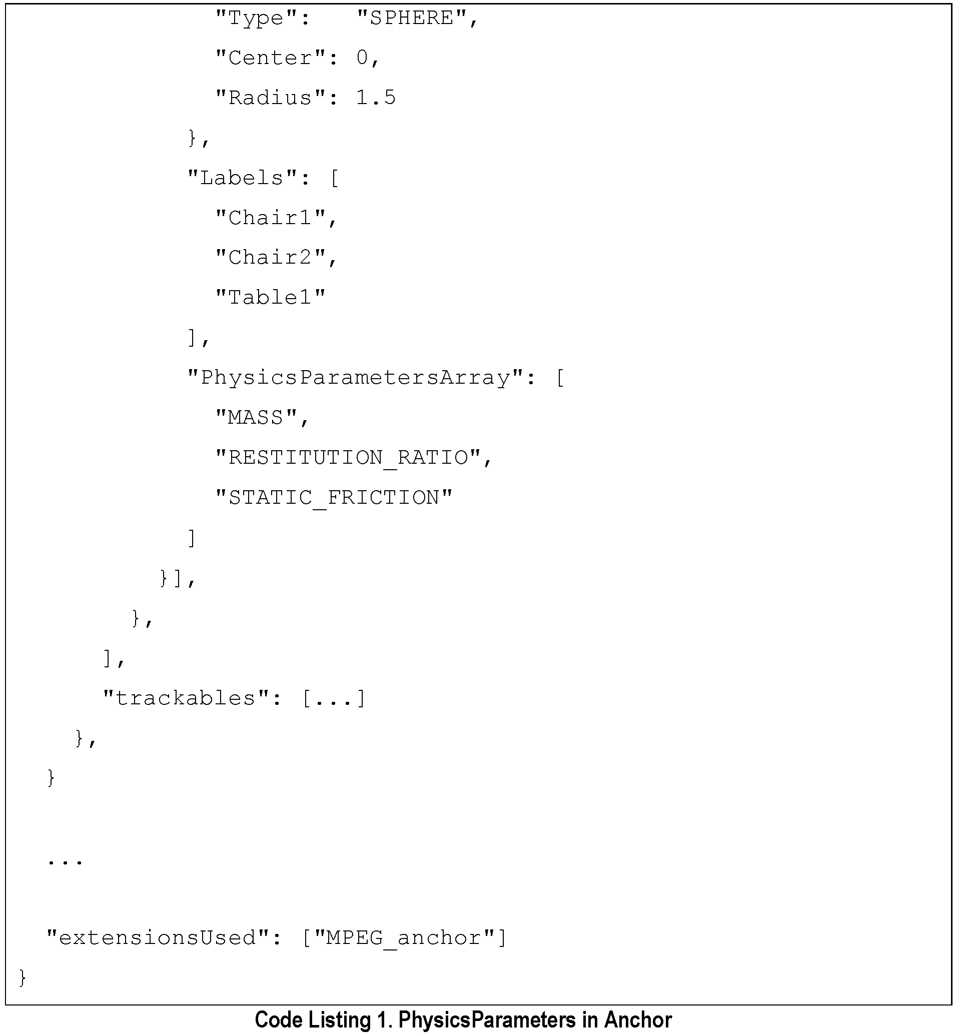

### Processing Model

The User Equipment (UE) receives and parses the Scene Description file.

When processing the MPEG_anchor extension, if a *PhysicsParameters* object is present, the UE checks to see if the UE may retrieve the recommended physics parameters for the identified real objects.

If not all the recommended parameters are satisfied, the UE may continue rendering the scene. For some embodiments, in this scenario, the UE may render the scene with a degraded XR experience.

At runtime, the UE may retrieve the representation of real environment, including the physics parameters as specified in the object *PhysicsParametersObject.*

For some embodiments, an example process may include: receiving a scene description file; parsing a physics parameter (or PhysicsParameters for some embodiments) description element; scanning the real environment to identify real objects; and generating the specified physics parameters for any object (or type of object) detected in the real environment for which the physics parameter (or PhysicsParameters for some embodiments) description element specifies such parameters.

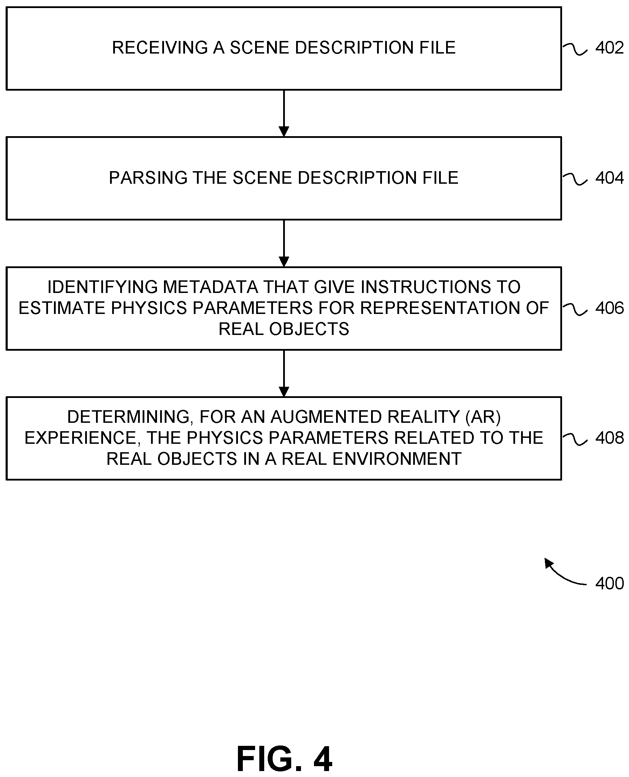

FIG. 4 is a flowchart illustrating an example decoding process according to some embodiments. For some embodiments, an example process 400 may include receiving 402 a scene description file. For some embodiments, the example process 400 may further include parsing 404 the scene description file. For some embodiments, the example process 400 may further include identifying 406 metadata that give instructions to estimate physics parameters for representation of real objects. For some embodiments, the example process 400 may further include determining 408, for an augmented reality (AR) experience, the physics parameters related to the real objects in a real environment.

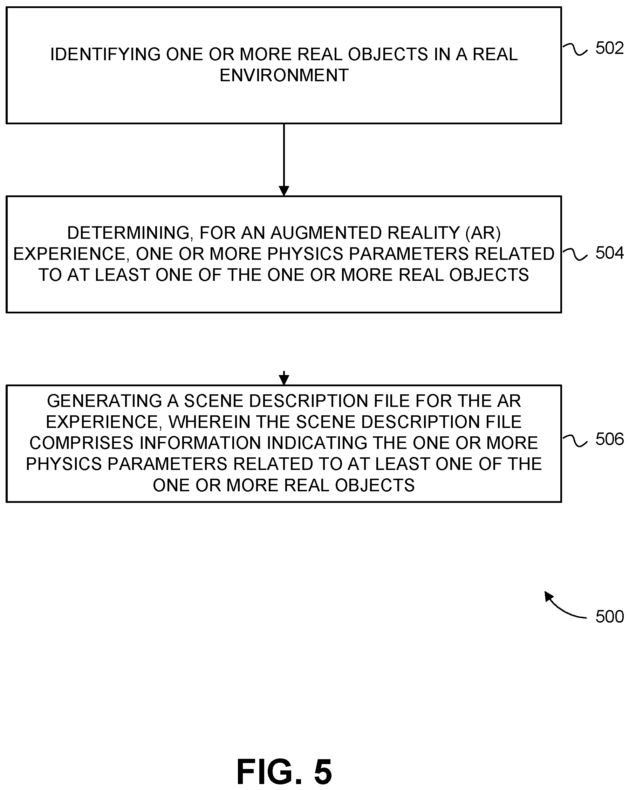

FIG. 5 is a flowchart illustrating an example encoding process according to some embodiments. For some embodiments, an example process 500 may include identifying 502 one or more real objects in a real environment. For some embodiments, the example process 500 may further include determining 504, for an augmented reality (AR) experience, one or more physics parameters related to at least one of the one or more real objects. For some embodiments, the example process 500 may further include generating 506 a scene description file for the AR experience, wherein the scene description file comprises information indicating the one or more physics parameters related to at least one of the one or more real objects.

An example apparatus in accordance with some embodiments may include at least one processor configured to perform any one of the methods described within this application. An example apparatus in accordance with some embodiments may include a computer-readable medium storing instructions for causing one or more processors to perform any one of the methods described within this application. An example apparatus in accordance with some embodiments may include at least one processor and at least one non-transitory computer-readable medium storing instructions for causing the at least one processor to perform any one of the methods described within this application. An example signal in accordance with some embodiments may include a bitstream generated according to any one of the methods described within this application.

While the methods and systems in accordance with some embodiments are generally discussed in context of extended reality (XR), some embodiments may be applied to any XR contexts such as, e.g., virtual reality (VR) / mixed reality (MR) / augmented reality (AR) contexts. Also, although the term "head mounted display (HMD)" is used herein in accordance with some embodiments, some embodiments may be applied to a wearable device (which may or may not be attached to the head) capable of, e.g., XR, VR, AR, and/or MR for some embodiments.

A first example method in accordance with some embodiments may include: receiving a scene description file; parsing the scene description file; identifying metadata that give instructions to estimate physics parameters for representation of real objects; and determining, for an augmented reality (AR) experience, the physics parameters related to the real objects in a real environment.

For some embodiments of the first example method, the physics parameters include physics parameters used for a simulation of at least one of the real objects, and parsing the scene description file includes parsing a physics parameters description element.

Some embodiments of the first example method may further include: creating a digital twin of at least one of the real objects, wherein the digital twin, in the AR experience, simulates operation of one of the real objects in the real environment.

Some embodiments of the first example method may further include scanning the real environment to identify real objects.

For some embodiments of the first example method, determining the physics parameters includes generating one or more specified physics parameters for at least one object detected in the real environment.

For some embodiments of the first example method, at least one of the specified physics parameters corresponds to the metadata that give instructions to estimate a physics parameters description element.

Some embodiments of the first example method may further include receiving instructions to estimate one or more physics parameters corresponding to one or more real objects in the real environment.

Some embodiments of the first example method may further include decoding the scene description file.

A first example apparatus in accordance with some embodiments may include: a processor; and a memory storing instructions operative, when executed by the processor, to cause the apparatus to perform any one of the methods listed above.

A second example method in accordance with some embodiments may include: identifying one or more real objects in a real environment; determining, for an augmented reality (AR) experience, one or more physics parameters related to at least one of the one or more real objects; and generating a scene description file for the AR experience, wherein the scene description file includes information indicating the one or more physics parameters related to at least one of the one or more real objects.

Some embodiments of the second example method may further include: sending instructions to estimate one or more physics parameters related to at least one of the one or more real objects.

Some embodiments of the second example method may further include scanning the real environment to identify real objects.

For some embodiments of the second example method, the scene description file complies with an MPEG-based standard.

Some embodiments of the second example method may further include: encoding the scene description file; and transmitting the encoded scene description file to a client device.

A second example apparatus in accordance with some embodiments may include: a processor; and a memory storing instructions operative, when executed by the processor, to cause the apparatus to perform any one of the methods listed above.

One or more embodiments provide a computer program including instructions which when executed by one or more processors cause such processors to perform the encoding and/or decoding methods according to any of the embodiments described above. One or more embodiments also provide a computer readable storage medium having stored thereon instructions for encoding or decoding video data according to the methods described above.

One or more embodiments provide a computer readable storage medium having stored thereon video data generated according to the methods described above. One or more embodiments also provide a method and apparatus for transmitting or receiving video data generated according to the methods described above.

The embodiments described herein may be implemented in, for example, a method or a process, an apparatus, a software program, a data stream, or a signal. Even if only discussed in the context of a single form of implementation (e.g., as a method), the implementation of such features may also be implemented in other forms. An apparatus may be implemented in, for example, appropriate hardware, software, and firmware. Corresponding methods may be implemented in, for example, a processor.

Various numeric values are used in the present application. Such specific values are for example purposes and the embodiments described are not limited to these specific values.

Various methods are described herein, and such methods include one or more steps or actions for achieving the described method. Unless a specific order of steps or actions is required for the proper operation of the method, the order and/or use of specific steps and/or actions may be modified or combined. Additionally, terms such as "first", "second", etc. may be used in various embodiments to modify an element, component, step, operation, etc., for example, a "first decoding" and a "second decoding". Use of such terms does not imply an order to the operations unless specifically required.

The present application may refer to "determining" various pieces of information. Determining information may include one or more of, for example, estimating, calculating, predicting, or retrieving (e.g., from memory) the information.

The present application may refer to "accessing" various pieces of information. Accessing information may include one or more of, for example, receiving, retrieving (e.g., from memory), storing, moving, copying, calculating, determining, predicting, or estimating the information. Similarly, the present application may refer to "receiving" various pieces of information. Receiving information may include one or more of, for example, accessing or retrieving (e.g., from memory) the information.

It is to be understood that use of any of the following "/", "and/or", and "at least one of' is intended to encompass all possible selections of listed items, taken either individually or in any combination thereof.

While specific embodiments have been described in the foregoing description in connection with the accompanying drawings, it should be understood that embodiments described herein are examples only and should not be taken as limiting the scope of the present application or the following claims. Although features and elements are described herein in particular combinations, those of ordinary skill in the art will appreciate that such features or elements may be used alone or in any combination with the other features and elements. It is understood, therefore, that the overall teachings of the present application are not limited to the particular embodiments, implementations, and examples disclosed herein, but are intended to cover variations, modifications, and alternatives as defined by the appended claims and any and all equivalents thereof.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

Various numeric values may be used in the present application, for example. The specific values are for example purposes and the aspects described are not limited to these specific values.

Embodiments described herein may be carried out by computer software implemented by a processor or other hardware, or by a combination of hardware and software. As a non-limiting example, the embodiments can be implemented by one or more integrated circuits. The processor can be of any type appropriate to the technical environment and can encompass one or more of microprocessors, general purpose computers, special purpose computers, and processors based on a multi-core architecture, as non-limiting examples.

When a figure is presented as a flow diagram, it should be understood that it also provides a block diagram of a corresponding apparatus. Similarly, when a figure is presented as a block diagram, it should be understood that it also provides a flow diagram of a corresponding method/process.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended for as many items as are listed.

Implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

Note that various hardware elements of one or more of the described embodiments are referred to as "modules" that carry out (i.e., perform, execute, and the like) various functions that are described herein in connection with the respective modules. As used herein, a module includes hardware (e.g., one or more processors, one or more microprocessors, one or more microcontrollers, one or more microchips, one or more application-specific integrated circuits (ASICs), one or more field programmable gate arrays (FPGAs), one or more memory devices) deemed suitable by those of skill in the relevant art for a given implementation. Each described module may also include instructions executable for carrying out the one or more functions described as being carried out by the respective module, and it is noted that those instructions could take the form of or include hardware (i.e., hardwired) instructions, firmware instructions, software instructions, and/or the like, and may be stored in any suitable non-transitory computer-readable medium or media, such as commonly referred to as RAM, ROM, etc.

Although features and elements are described above in particular combinations, one of ordinary skill in the art will appreciate that each feature or element can be used alone or in any combination with the other features and elements. In addition, the methods described herein may be implemented in a computer program, software, or firmware incorporated in a computer-readable medium for execution by a computer or processor. Examples of computer-readable storage media include, but are not limited to, a read only memory (ROM), a random access memory (RAM), a register, cache memory, semiconductor memory devices, magnetic media such as internal hard disks and removable disks, magneto-optical media, and optical media such as CD-ROM disks, and digital versatile disks (DVDs). A processor in association with software may be used to implement a radio frequency transceiver for use in a WTRU, UE, terminal, base station, RNC, or any host computer.

## Claims

1. A method comprising:
receiving a scene description file;
parsing the scene description file;
identifying metadata that give instructions to estimate physics parameters for representation of real objects; and
determining, for an augmented reality (AR) experience, the physics parameters related to the real objects in a real environment.

2. The method of claims 1,
wherein the physics parameters comprise physics parameters used for a simulation of at least one of the real objects, and
wherein parsing the scene description file comprises parsing a physics parameters description element.

3. The method of any one of claims 1-2, further comprising:
creating a digital twin of at least one of the real objects,
wherein the digital twin, in the AR experience, simulates operation of one of the real objects in the real environment.

4. The method of any one of claims 1-3, further comprising scanning the real environment to identify real objects.

5. The method of any one of claims 1-4, wherein determining the physics parameters comprises generating one or more specified physics parameters for at least one object detected in the real environment.

6. The method of claims 5, wherein at least one of the specified physics parameters corresponds to the metadata that give instructions to estimate a physics parameters description element.

7. The method of any one of claims 1-6, further comprising receiving instructions to estimate one or more physics parameters corresponding to one or more real objects in the real environment.

8. The method of any one of claims 1-6, further comprising decoding the scene description file.

9. An apparatus comprising:
a processor; and
a memory storing instructions operative, when executed by the processor, to cause the apparatus to perform the method of any one of claims 1 through 8.

10. A method comprising:
identifying one or more real objects in a real environment;
determining, for an augmented reality (AR) experience, one or more physics parameters related to at least one of the one or more real objects; and
generating a scene description file for the AR experience,
wherein the scene description file comprises information indicating the one or more physics parameters related to at least one of the one or more real objects.

11. The method of claim 10, further comprising sending instructions to estimate one or more physics parameters related to at least one of the one or more real objects.

12. The method of any one of claims 10-11, further comprising scanning the real environment to identify real objects.

13. The method of any one of claims 10-12, wherein the scene description file complies with an MPEG-based standard.

14. The method of any one of claims 10-13, further comprising:
encoding the scene description file; and
transmitting the encoded scene description file to a client device.

15. An apparatus comprising:
a processor; and
a memory storing instructions operative, when executed by the processor, to cause the apparatus to perform the method of any one of claims 10 through 14.
